# EUROPEAN PATENT APPLICATION

(11) **EP 1 584 799 A2**
(43) Date of publication of application: **12.10.2005**
(21) Application number: 05006564.8
(22) Date of filing: 24.03.2005
(51) Int. Cl.: F01L 1/02

(54) **Chain guide bracket**

(30) Priority: 09.04.2004 US 821327
(71) Applicant: BorgWarner Inc., MI 48326-2872 (US)
(72) Inventor: Shum, Andrew C., Ithaca, New York 14850 (US)
(74) Representative: Petruzziello, Aldo

(57) **Abstract**

A chain guide and mounting system are disclosed, which lead the chain guide to be arch-loaded and to have greater strength than traditional chain guides under normal operating conditions. The mounting bolt hole locations are designed for a given chain guide bolt slot configuration, or *vice versa*, or the bolt shafts are enlarged. The relationship between the bolt holes and the bolt slots is such that when the chain guide is mounted, loaded, and subjected to normal operating temperatures, the bolts are flush with the sides of the bolt slots. Thus, some of the forces from the operating chain are converted into compressive stresses, thereby reducing the maximum tensile stress, reducing maximum deflection, and increasing the safety factor of the chain guide.

## Description

### BACKGROUND OF THE INVENTION

### FIELD OF THE INVENTION

The invention pertains to the field of chain guides. More particularly, the invention pertains to a chain guide for an engine timing system.

### DESCRIPTION OF RELATED ART

Typical chain guides for engine timing systems have been made of metals and composite materials such as glass-reinforced polymers. The loading condition of conventional chain guides for these systems has been typically two-bolt, three-bolt, or more than three-bolt patterns fixing the guides to the engine. The guides support the chains used in engine timing systems to transfer torque and reduce the ratio from the crankshaft sprocket to the camshaft sprockets. It is necessary to maintain chain tension in order to avoid loss of control in the chain strands between the sprockets.

Increasingly, chain guides are made of plastic. This plastic flattens and widens upon loading and expands when heated from ambient temperature to typical operating conditions of 80 to 150 °C. Such chain guides typically have at least one bolt slot oblong in the direction parallel to the chain-contacting surface. The oblong bolt slots are designed to be long enough that deflection and thermal expansion of the chain guide is not inhibited by contact with the mounting bolts.

Typically, space is limited in the engine area where the engine timing system is located, thus limiting the allowable volume the chain guide can occupy. This space limitation forces the design of chain guides such that they become highly stressed, beam-like components during use. In conventional design, the chain guides are supported as curved beams with slots for the mounting bolts to pass through and into the engine housing. Thus, when the distributed pressure from the chain loads the beam-like bracket, the stress at mid-span is that of a simply-supported two-point beam.

In an effort to reduce the beam length, important to reducing the stress on the beam, variations in the chain guide design add a third bolt slot about mid-beam. The third bolt slot supports the chain guide at mid-beam as the chain load causes deflection of the beam. With sufficient deflection at mid-beam, the additional bolt takes up further loading and prevents further deflection at mid-beam. Thus loaded, a guide with a third bolt effectively splits the beam length into two shorter half-beams.

There have been a number of chain guides patented in the past.

U.S. Patent No. 4,832,664, GUIDE RAIL FOR DRIVE CHAINS, issued May 23, 1989, discloses a method and guide rail for chains in an internal combustion engine. The guide rail consists of a plastic material and is formed by a slideway lining body and a carrier. Both the carrier and the slideway lining body are produced in a progressive manufacturing cycle and are interconnected via one or several dovetailed connections.

U.S. Patent No. 6,036,613, GUIDE RAIL FOR GUIDING AND/OR TENSIONING A CHAIN, issued March 14, 2000, describes a slide rail, including a slide lining body and a carrier which consist of a wear-resistant and highly stressable plastic material. The slide rail is held at one location by means of a bolt received by a bush on a housing and is provided with a supporting device at a second spaced location. The supporting device, which eliminates the need for a second bolt and a bush, is formed by a supporting section of the housing and a supported area of the slide rail. The supported area also consists of a wear-resistant plastic material.

U.S. Patent No. 6,312,353, CHAIN GUIDE, issued November 6, 2001, discloses a chain guide for guiding a chain, including an elongated chain guide body pivotally connected at one end to a fixed support member and having an aperture formed in an opposite end of the chain guide body, and a collar loosely fitted in the aperture in such a manner that a clearance is defined between the chain guide body and the collar at least on that side of the collar which is aligned with a direction of pivotal movement of the chain guide body. The collar is firmly secured to the fixed support member so that the chain guide body is allowed to pivot within the range of the clearance. With the clearance thus provided, the chain is protected against excessive tightening or loosening which may otherwise occur when the chain guide is mounted on the fixed support member.

U.S. Patent No. 6,412,464, CHAIN GUIDE FOR A CONTROL-SHAFT DRIVE OF AN INTERNAL-COMBUSTION ENGINE AND METHOD OF PRODUCING A CHAIN GUIDE, issued July 2, 2002, describes a chain guide rail for an internal combustion engine of a motorcycle. The chain guide rail consists of a body portion and a pin, both made with a first material, an overmolding of a second material which covers both the pin and the body portion, and a longitudinal axis through the length of the guide rail. The pin, inserted into a housing recess in the internal-combustion engine, is restrained from moving perpendicular to the first longitudinal axis but is free to move parallel to the axis. Preferred embodiments of the invention utilize a fastener to hold the guide rail to the housing.

U.S. Patent No. 6,585,614, GUIDE FOR A CHAIN DRIVE, issued July 1, 2003, discloses a guide for a chain drive installed on an engine body having threaded holes formed therein with a pitch, wherein the guide has at least two mounting portions adapted to be attached to the engine body by means of screws threaded into the threaded holes in the engine body. At least one of the mounting portions has at least two circular mounting holes spaced in a longitudinal direction of the guide so that the guide can be also mounted to at least one similar engine body having threaded holes formed therein with a different pitch.

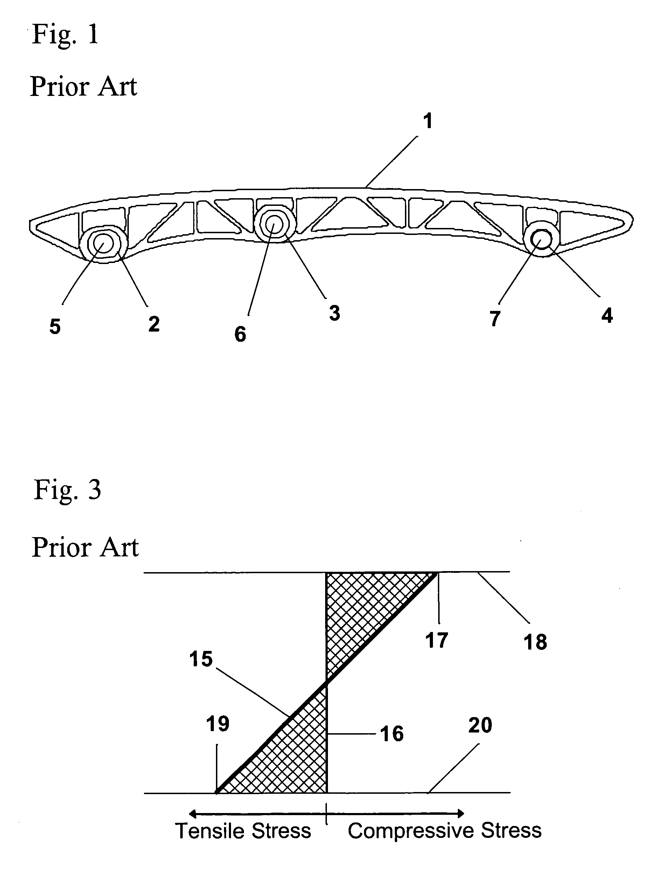

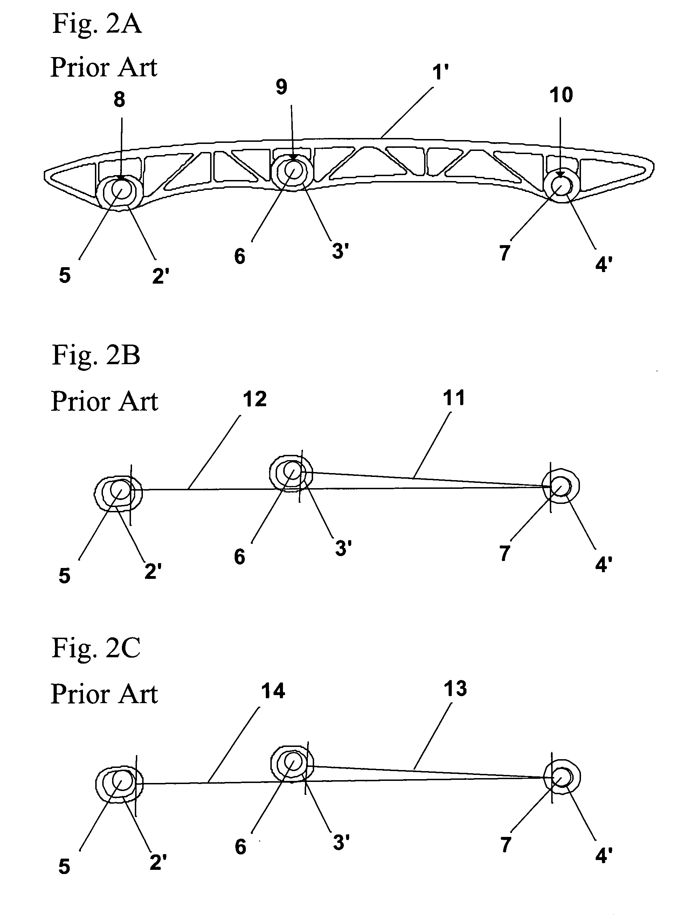

Figure 1 shows a side view of the prior art mounting of an unloaded chain guide (1) at ambient temperature through bolt slots (2), (3), and (4) in the chain guide using bolt holes (5), (6), and (7). For the purpose of this illustration, the shafts of the mounting bolts are assumed to have the same diameter as their respective bolt holes. As shown in Figure 2A, when the chain guide (1') deforms by flattening, lengthening, and expanding upon loading and heating to operating temperature, the oblong bolt slots (2'), (3'), and (4') deform. The distances between the bolt slots increase slightly as a result of the deformation, while the bolt holes and shafts (5), (6), and (7) remain at the same positions. Bolt slots (2') and (3') are oblong and larger than their bolt holes and shafts (5) and (6), so that at operating temperature, the bolt shafts still have clearance from the bolt slots to the left and the right. The contact vectors (8), (9), and (10) for the three bolt slots are primarily in the vertical direction under a vertical load from the contacting chain. This mounting produces a beam-loaded condition.

In the prior art, the distance between nearest edges of the bolt holes is always larger than the distance between nearest edges of their respective bolt slots. Figures 2B and 2C show the bolt slots and the bolt holes of Figure 2A under operating conditions with the body of the chain guide not shown, so that the relevant distances can be more easily seen. Figure 2B shows the distances between bolt shafts, and Figure 2C shows the distances between bolt slots in the prior art. Bolt shaft distance (11) is always larger than bolt slot distance (13) in the prior art, and bolt shaft distance (12) is always larger than bolt slot distance (14).

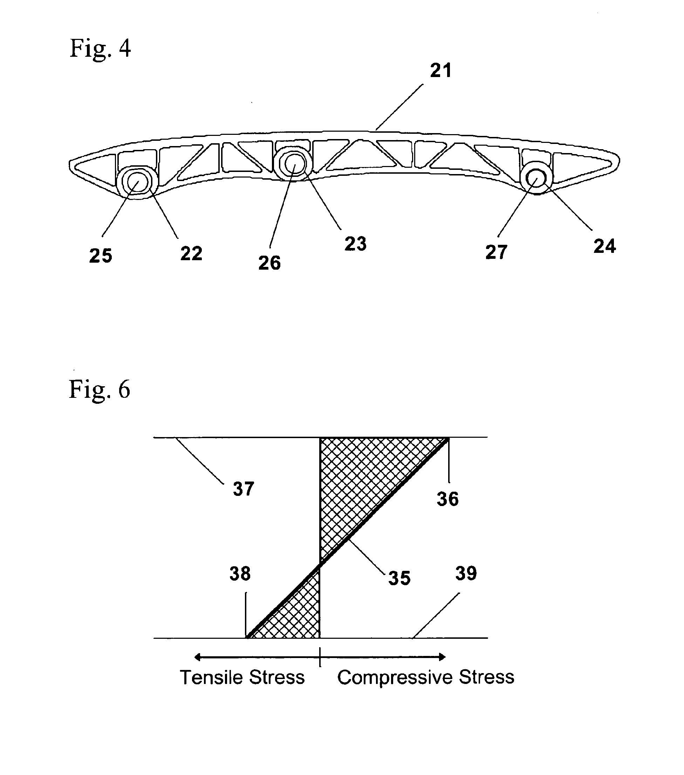

Figure 3 illustrates the stress profile (15) for a beam-loaded chain guide such as the one in Figure 2A. Increasing tensile stresses are indicated to the left of the zero-stress line (16), and increasing compressive stresses are indicated to the right. The vertical direction indicates the vertical location on the chain guide from the chain-contacting surface at the top to the back of the chain guide at the bottom. For beam-loading, the upper half of the guide is under compressive stress, while the lower half of the guide is under tensile stress, as shown in Figure 3. The maximum compressive stress (17), Cₘₐₓ, is at the chain-contacting surface (18), and the maximum tensile stress (19), Tₘₐₓ, is along the surface (20) opposite of the chain-contacting surface of the chain guide.

Material costs account for a significant portion of the final cost to manufacture a chain guide. Thus there is an advantage to be able to make a chain guide of a desired strength with less material. Bolt slots on chain guides are oblong in the prior art only to allow space for thermal and loading deformation of the chain guide. The load is supported in a beam-like manner on the top of the bolt slots, where the bolt shafts are in contact with the bolt slots of the chain guide. When these guides fail, they usually fail as a result of excessive deflection caused by the high tensile stresses.

Therefore, there is a need in the art for a chain guide, which sustains more load without excessive tensile stress or deflection or is able to sustain an equivalent load as the prior art using less manufacturing material.

### SUMMARY OF THE INVENTION

A chain guide and method for mounting the chain guide are described. The chain guide is preferably arch-loaded and has greater strength than traditional chain guides under normal operating conditions. The mounting bolt hole locations are designed for a given chain guide bolt slot configuration, or *vice versa,* or the bolt shafts are enlarged. The relationship between the bolt holes and the bolt slots is such that when the chain guide is mounted and subjected to normal operating temperatures, the bolts are flush with the sides of the bolt slots. Thus, some of the forces from the operating chain are converted into compressive stresses, thereby reducing the maximum tensile stress and increasing the strength of the chain guide.

The chain guide mounting system includes a mounting surface having at least two bolt holes; a plurality of bolts each having a bolt threaded section and a bolt shaft extending from the bolt threaded section and mountable in the bolt holes of the mounting surface by the threaded sections, wherein each pair of nearest edges of bolt shafts of each pair of mounted bolts is spaced apart by a first distance; and a chain guide having at least two bolt slots corresponding to mounted bolts, whereby the chain guide can be mounted with the bolts to the mounting surface, each pair of bolt slots of the mounted chain guide being spaced apart by a second distance between nearest edges of the bolt slots either under load or unloaded at an operating temperature, wherein for at least one pair of bolt shafts the first distance is equal to or slightly smaller than the second distance such that the bolt shafts contact the nearest edges of the bolt slots. The mounting surface is preferably an engine housing, and operating temperature is preferably higher than ambient temperature.

In a first embodiment of the present invention, the chain guide is designed with bolt slots positioned for mounting to a bolt hole pattern design. In another embodiment, the bolt holes are positioned for a chain guide and bolt slot design. In yet another embodiment, the size of the shafts of the mounting bolts is changed for use with a chain guide design and a bolt hole pattern design. In yet another embodiment, the chain guide has at least two bolt slots under arch-loaded conditions and at least one bolt slot not under arch-loaded conditions. The invention is preferably used in an engine timing system.

### BRIEF DESCRIPTION OF THE DRAWINGS

Fig. 1 shows an arrangement of an unloaded three-slot chain guide and the location of the corresponding three bolt holes at ambient temperature as known in the prior art.
Fig. 2A shows the mounting of Fig. 1 at operating conditions.
Fig. 2B shows the distances between bolt shafts in Fig. 2A.
Fig. 2C shows the distances between the bolt slots in Fig. 2A.
Fig. 3 shows a typical stress profile of a beam-loaded structure as in Fig. 2A.
Fig. 4 shows one embodiment of the present invention at ambient temperature, where the bolt holes have been moved closer together to produce an arch-loaded design.
Fig. 5A shows the mounting of Fig. 4 at operating conditions.
Fig. 5B shows the distances between bolt shafts of Fig. 5A.
Fig. 5C shows the distances between the bolt slots of Fig. 5A.
Fig. 6 shows the stress profile of an arch-loaded structure as in Fig. 5.
Fig. 7 shows another embodiment of the present invention at ambient temperature, where the bolt slots of the chain guide have been moved farther apart relative to prior art designs.
Fig. 8A shows the mounting of Fig. 7 at operating conditions.
Fig. 8B shows the distances between bolt shafts of Fig. 8A.
Fig. 8C shows the distances between the bolt slots of Fig. 8A.
Fig. 9 shows another embodiment of the present invention, where some of the bolts have been redesigned to have larger shafts.
Fig. 10A shows the mounting of Fig. 9 at operating conditions with the larger bolts.
Fig. 10B shows the distances between bolt shafts of Fig. 10A.
Fig. 10C shows the distances between the bolt slots of Fig. 10A.

### DETAILED DESCRIPTION OF THE INVENTION

The present invention increases the strength of the chain guide by reducing tensile stresses through use of arch-loading. Typically, beam-like structures fail due to fatigue or overload in tension. As a beam section is loaded, the portion of the beam away from the load, as in the underside of a bridge, becomes stressed in tension. By use of the present invention, the chain guide designer intentionally locates and tolerances the bolt holes and/or slots such that, upon initial beam deflection, as the beam flattens and widens, the bolt slots eventually constrain, further widening the guide horizontally. Constraint of horizontal movement of the bolt slots is planned for at engine operating temperatures to account for the effects of thermal expansion of the chain guide. The distance between nearest edges of one or more pairs of bolt shafts is equal to or smaller than the distance between nearest edges of one or more pairs of bolt slots at operating conditions in all of the embodiments of the present invention.

The increased guide strength allows for a greater maximum sustainable vertical load for a given chain guide, or the use of a lighter chain guide to support a given vertical load. This novel feature can be incorporated in several different ways. The bolt holes on the engine can be moved closer together, the bolt slots in the chain guide can be moved farther apart, or the bolt shafts can be made larger without a change to the bolt holes or the chain guide bolt slots.

The following are terms and concepts relating to the present invention. Beam-loaded describes a structure where external forces produce equally both tensile and compressive stresses. Arch-loaded describes a structure where external forces produce primarily compressive stresses. A bolt or mounting bolt, the two terms being used interchangeably herein, preferably includes a bolt threaded section, a bolt shaft, and a bolt head, and is the part which mounts a chain guide to a mounting surface. A bolt threaded section is the threaded part of the bolt, which screws into the bolt hole when the chain guide is mounted. A bolt shaft is the part of the bolt, which extends from the mounting surface and laterally contacts the bolt slot when the chain guide is mounted to the mounting surface by the bolt. A bolt hole, typically drilled into the engine housing, is a threaded hole into which a mounting bolt is screwed. A bolt slot is a hole in a chain guide, through which a mounting bolt is placed. A contact vector is defined as the point at which the bolt slot contacts the mounted bolt shaft in the direction normal to the surface of the bolt slot at this point. Operating temperature is the temperature of the chain guide when the engine is running. Operating conditions are the conditions where the chain guide is mounted, loaded, and at operating temperature.

For illustrative purposes, the mounting bolt shafts have the same diameter as their respective threaded sections and their respective bolt holes for the first two described embodiments of the present invention as shown in Figures 4, 5, 7, and 8. Therefore, bolt hole distance and bolt shaft distance are equivalent in these examples. The bolt shaft can be smaller, equal to, or larger than its bolt threaded section or bolt hole without deviating from the spirit of the invention.

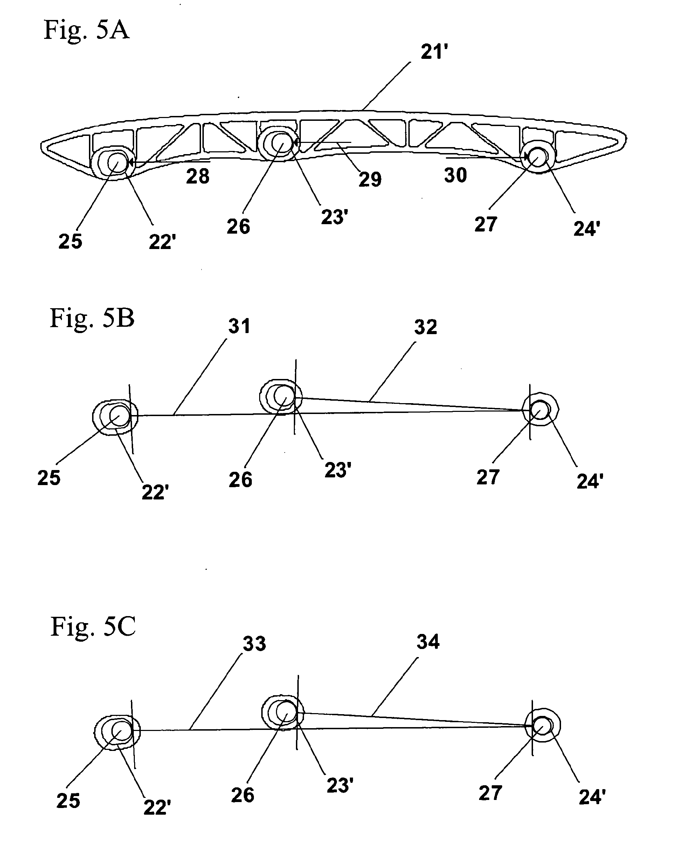

One embodiment of the present invention, where the chain guide (21) is mounted through bolt slots (22), (23), (24) using bolt holes (25), (26), (27) moved closer together than in the prior art, is shown unloaded at ambient temperature in Figure 4. In this example, the mounting surface has three bolt holes, and the chain guide has three bolt slots, but the invention is also applicable to a surface and chain guide with two or more than three bolt holes and bolt slots. When the chain guide (21') is loaded and heated to operating temperatures, as shown in Figure 5A, the bolt slots (22'), (23'), (24') move farther apart from each other. The bolt shafts (25), (26), and (27) are flush with the sides of the bolt slots (22'), (23'), and (24') at operating conditions. The contact vectors (28), (29), and (30) for the three bolt slots are primarily in the horizontal direction under a vertical load from the contacting chain. This produces an arch-loaded condition, where the chain guide experiences primarily compressive stresses.

In the present invention, the distance between nearest edges of the bolt shafts is always equal to or smaller than the distance between nearest edges of the bolt slots at operating conditions. Figures 5B and 5C show the bolt slots and the bolt holes of Figure 5A under operating conditions with the body of the chain guide not shown, so that the relevant distances can be more easily seen. Figure 5B shows the distances between bolt shafts, and Figure 5C shows the distances between bolt slots. At operating conditions, the distance (31) between the nearest edges of bolt hole (25) and bolt hole (27) is equal to or slightly smaller than the distance (33) between the nearest edges of bolt slot (22') and bolt slot (24'), and the distance (32) between bolt hole (26) and bolt hole (27) is equal to or slightly smaller than the distance (34) between bolt slot (23') and bolt slot (24').

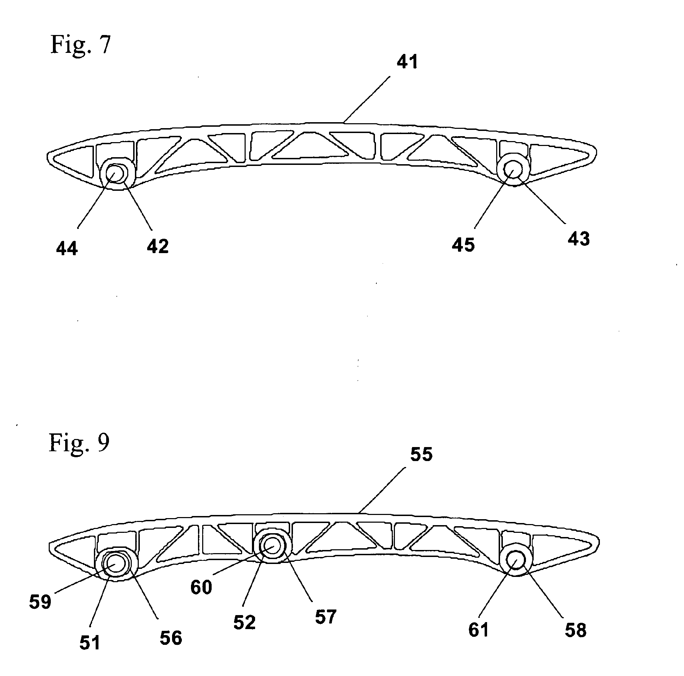

A comparison of Figures 3 and 6 illustrates how the stress profile through the chain guide changes by going from a beam-loaded chain guide mounting to the arch-loaded chain guide of the present invention. For a given vertical load, the total stress (shaded areas of Figure 3 and Figure 6) on the chain guide is the same for both the beam-loaded and the arch-loaded chain guide. For arch-loading, the stress profile (35) is uniformly shifted in the direction of compressive stress, as shown in Figure 6. The maximum arch-loaded compressive stress (36), Cₘₐₓ, is still at the chain-contacting surface (37), and the maximum tensile stress (38), Tₘₐₓ, is still along the surface (39) opposite of the chain-contacting surface of the chain guide. The maximum tensile stress (38), however, is significantly decreased, and the maximum compressive stress (36) is equally increased over the beam-loaded design. Since most materials are much stronger in compression than in tension, the arch-loaded design is stronger and able to withstand a greater load than the prior art beam-loaded design.

Thermal stress analysis of chain guides mounted with horizontal contact vectors between the bolt shafts and the bolt slots at operating conditions suggests that an arch-loaded condition exists, when the holes and slots are thus arranged. Arch loading of a chain guide produces lower tensile stresses than would be expected by beam-loading calculations. This behavior is explained by the arch-loaded conditions. Subsequent thermal stress analysis confirms the load vectors being consistent with arch-type loading.

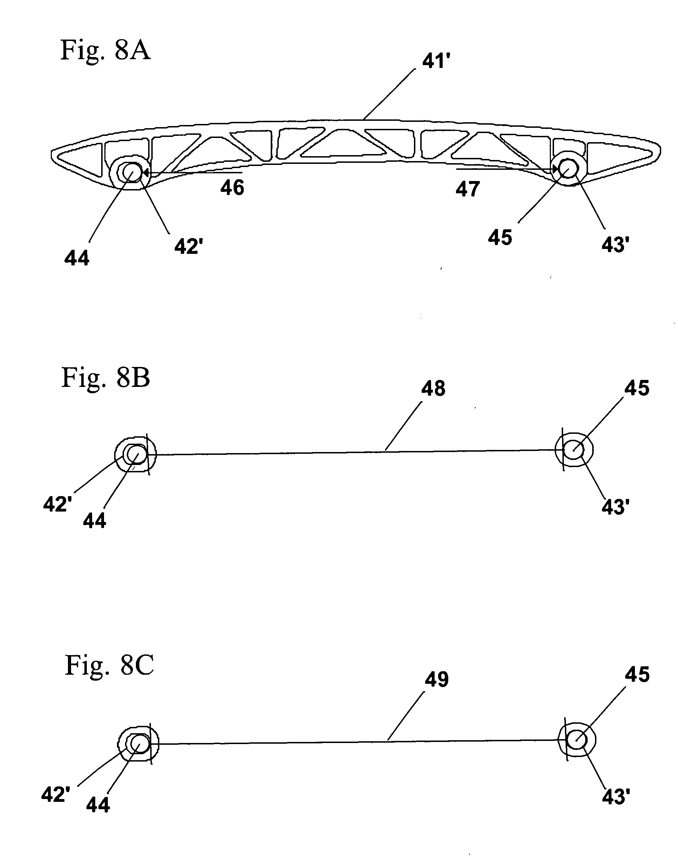

In another embodiment of the present invention, shown in Figure 7, a chain guide (41) with bolt slots (42) and (43) is designed for mounting to a given arrangement of bolt holes (44) and (45) at ambient temperature. In this example, the mounting surface has two bolt holes, and the chain guide has two bolt slots, but the invention is also applicable to a surface and chain guide with three or more bolt holes and bolt slots. The chain guide design is loaded and heated to its operating temperature, which causes the chain guide to expand, lengthen, and flatten, moving the bolt slots farther apart from each other. The distance between the bolt slots is determined at these conditions. The bolt slot configuration is subsequently modified as necessary so that it meets the conditions that the chain guide can be mounted to the bolt hole configuration with bolts through its bolt slots at ambient temperature (42) and (43). The bolt slots (42') and (43') of the loaded chain guide (41') become flush with the bolt shafts (44) and (45) at the sides rather than the top under operating conditions, as in Figure 8A. The bolt shafts and bolt slots form horizontal contact vectors (46) and (47) with the given bolt holes (44) and (45). This arch-loaded design will have a similar stress profile to the previous embodiment, shown in Figure 6.

Figures 8B and 8C show the bolt slots and the bolt holes of Figure 8A with the body of the chain guide not shown, so that the relevant distances can be more easily seen. Figure 8B shows the distances between bolt shafts, and Figure 8C shows the distances between bolt slots. At operating conditions, the distance (48) between the nearest edges of bolt hole (44) and bolt hole (45) is equal to or slightly smaller than the distance (49) between the nearest edges of bolt slot (42') and bolt slot (43').

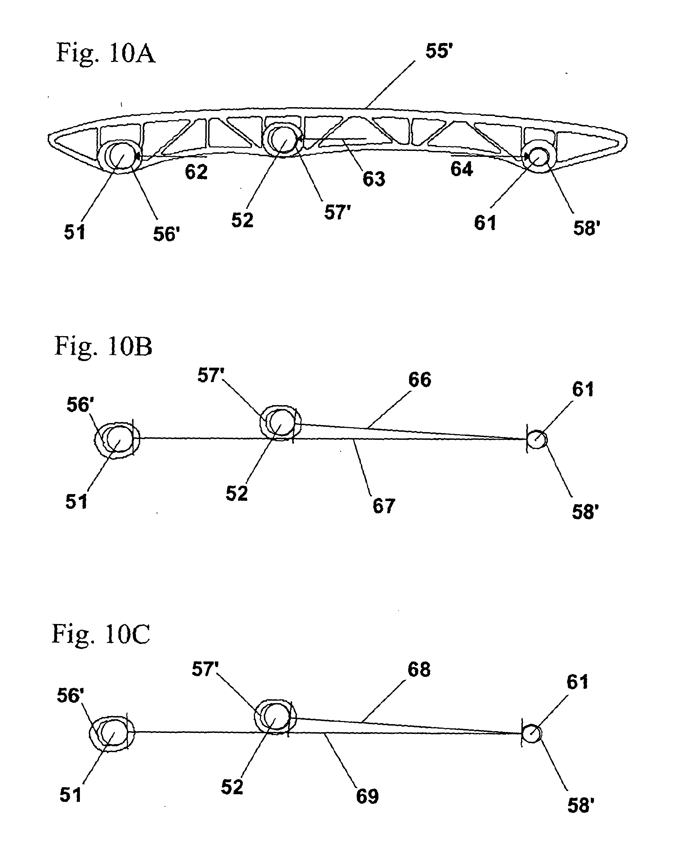

In yet another embodiment of the invention, shown in Figure 9, bolt shafts (51) and (52) are enlarged for mounting a given chain guide (55) with bolt slots (56), (57), and (58) at ambient temperature with given bolt holes (59), (60), and (61). In this example, the mounting surface has three bolt holes, and the chain guide has three bolt slots, but the invention is also applicable to a surface and chain guide with two or more than three bolt holes and bolt slots. The bolt shafts (51) and (52) have a larger diameter than their bolt threaded sections (59) and (60) for two of the three mounting bolts. Bolt hole (61) and bolt shaft (61) have the same diameter for this illustration. Use of prior art bolts with bolt shafts of the same diameter as the bolt holes gives a beam-loaded chain guide at operating conditions, shown previously in Figure 2. In this embodiment of the invention, enlarging the bolt shaft for the two bolts in the oblong bolt slots achieves the same effect as moving the bolt holes closer together. When the chain guide (55') is loaded and heated to operating temperature, as shown in Figure 10A, the bolt shafts (51), (52), and (61) contact the bolt slots (56'), (57'), and (58') at the sides to achieve an arch-loaded condition. The bolt slots (56'), (57'), and (58') of the mounted chain guide (55') become laterally flush with the bolt shafts (51), (52), and (61) to create horizontal contact vectors (62), (63), and (64). This arch-loaded design is achieved without changing the chain guide or the bolt holes and will have a similar stress profile to the previous embodiments, as shown in Figure 6.

Figures 10B and 10C show the bolt slots and the bolt holes of Figure 10A under operating conditions with the body of the chain guide not shown, so that the relevant distances (66), (67), (68), and (69) can be more easily seen. Figure 10B shows the distances between bolt shafts, and Figure 10C shows the distances between bolt slots. At operating conditions, the distance (66) between the nearest edges of bolt shaft (52) and bolt shaft (61) is equal to or slightly smaller than the distance (68) between the nearest edges of bolt slot (57') and bolt slot (58'), and the distance (67) between bolt shaft (51) and bolt shaft (61) is equal to or slightly smaller than the distance (69) between bolt slot (56') and bolt slot (58').

In another embodiment of the invention, configurations as shown in Figures 5A, 8A, and 10A are achieved at operating temperatures with no load from a chain. This produces a chain guide with a compressive pre-load conditions, which will experience a reduced deflection under the load of a chain. Although the mountings shown in Figures 5A, 8A, and 10A have either two or three bolt holes and bolt slots, the invention is applicable to mountings with four or more bolt holes and slots as well.

Once the guide is constrained from further horizontal motion at the bolt slots, loading of the guide results in increased compressive load components directed along the curvature of the chain guide structure. Build-up of compressive stress follows the well-established mechanics of arch-type loading used by engineers since ancient times for construction. The compressive load components along the lower parts of the structure offset the tensile stresses typical of the lower guide regions, thus minimizing the maximum tensile stresses, which potentially lead to failure of the part. Minimizing tensile stresses improves fatigue life and overall performance of the chain guide. An arch-loaded structure also undergoes lower deflection than a comparable beam-loaded structure. Stiffer chain guides offer improvements in performance for chain control as well as for noise-vibration-harshness (NVH).

In yet another embodiment of the present invention, a chain guide with at least three bolt slots is mounted such that, under operating conditions, at least one pair of bolts provides arch-loaded conditions for at least one pair of bolt slots, but at least one interior bolt slot is not arch-loaded. This is accomplished for the mounting of Figure 4, for example, by moving either bolt hole (26) in Figure 4 slightly to the left or bolt slot (23) slightly to the right, such that the bolt does not contact the right edge of bolt slot (23) under operating conditions.

Therefore, without the use of additional material or additional volume, the effective strength of chain guides is increased such that stronger, more robust chain guide designs are achieved without adding material cost. Both cost and mass are critical components, if an automotive system is to be considered successful in the market. The present invention can be applied to the design of chain guides made from metallic materials as well as composite materials, since it deals only with geometry. The invention can also be readily retrofit into existing designs, since it only requires minor adjustments to bolt hole dimensions or bolt slot locations to realize the benefits. Such minor adjustments rarely require changes to the existing volume envelope of the system. Therefore, the invention is readily applicable to both future and existing designs with minimal impact to the overall system.

Accordingly, it is to be understood that the embodiments of the invention herein described are merely illustrative of the application of the principles of the invention. Reference herein to details of the illustrated embodiments is not intended to limit the scope of the claims, which themselves recite those features regarded as essential to the invention.

## Claims

1. A chain guide mounting system comprising:
a) a mounting surface having at least two bolt holes;
b) a plurality of bolts each comprising a bolt threaded section complementary to the bolt hole and a bolt shaft extending from the bolt threaded section, wherein the bolt is mountable in the bolt holes, and wherein nearest edges of the bolt shafts of each pair of bolts, when mounted, are spaced apart by a first distance; and
c) a chain guide having at least two bolt slots for receiving the bolts, wherein the chain guide is mountable with the bolts through the bolt slots to the mounting surface, nearest edges of each pair of bolt slots of the chain guide, when mounted, being spaced apart by a second distance, wherein for at least one pair of bolt shafts and at least one pair of bolt slots the first distance is equal to or slightly smaller than the second distance such that the bolt shafts contact the nearest edges of the bolt slots.

2. The mounting of claim 1, wherein the chain guide is under no load.

3. The mounting of claim 1, wherein the chain guide is under a load.

4. The mounting of claim 1, wherein the mounting surface is an engine housing.

5. The mounting of claim 1, wherein the system operates at a temperature higher than an ambient temperature.

6. The mounting of claim 1, wherein at least one first distance is greater than the second distance such that at least one of the bolt shafts does not contact the nearest edges of the bolt slots.

7. A chain guide mounting system comprising:
a) a mounting surface having at least two bolt holes spaced apart by a first distance between nearest edges of the bolt holes;
b) a mounting bolt for each bolt hole, mountable in the bolt hole of the mounting surface; and
c) a chain guide having a bolt slot corresponding to each bolt hole and spaced apart by a second distance between nearest edges of the bolt slots by which the chain guide can be mounted with the bolts to the mounting surface, wherein the first distance is equal to or slightly smaller than the second distance such that the bolts contact the nearest edges of the bolt slots.

8. The mounting of claim 7, wherein the chain guide is under no load.

9. The mounting of claim 7, wherein the chain guide is under a load.

10. The mounting of claim 7, wherein the mounting surface is an engine housing.

11. The mounting of claim 7, wherein the system operates at a temperature higher than an ambient temperature.

12. The mounting of claim 7, wherein at least one first distance is greater than the second distance such that at least one of the bolt shafts does not contact the nearest edges of the bolt slots.
